# EUROPEAN PATENT APPLICATION

(11) **EP 4 765 423 A1**
(43) Date of publication of application: **24.06.2026**
(21) Application number: 25837626.8
(22) Date of filing: 07.07.2025
(51) Int. Cl.: H01M 50/367, H01M 50/358, H01M 50/383, H01M 50/296, H01M 50/317

(54) **BATTERY PACK**

(30) Priority: 11.07.2024 KR 20240091695
(71) Applicant: LG Energy Solution, Ltd., Seoul 07335 (KR)
(72) Inventor: CHANG, Hyuk-Kyun, Daejeon 34122 (KR); KIM, Soo-Youl, Daejeon 34122 (KR); PARK, Gi-Chan, Daejeon 34122 (KR)
(74) Representative: Plasseraud IP
(86) International application number: PCT/KR2025/009764
(87) International publication number: WO 2026/014849

(57) **Abstract**

Disclosed is a battery pack. The battery pack includes a case providing an inner space and having a base plate; a battery module installed on the base plate and including a rear end cover having a venting hole; a first venting channel configured to cover the rear end cover and having a first inlet hole in communication with the venting hole and a first outlet hole; and a second venting channel configured to cover one side of the battery module, coupled to the first venting channel, and having a second inlet hole in communication with the first outlet hole and a second outlet hole.

## Description

### TECHNICAL FIELD

The present disclosure relates to a battery pack.

The present application claims priority to Korean Patent Application No. 10-2024-0091695 filed on July 11, 2024 in the Republic of Korea, the disclosure of which is incorporated herein by reference.

### BACKGROUND ART

As the demand for portable electronic products such as smartphones, tablet PCs, and smart watches increases significantly and electric vehicles become increasingly widespread, research is being actively conducted on batteries installed in these vehicles, especially secondary batteries that allow repeated charging and discharging.

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

Lithium secondary batteries primarily comprise lithium-based oxides and carbon materials for a positive electrode active material and a negative electrode active material, respectively. A lithium secondary battery includes an electrode assembly including a positive electrode plate and a negative electrode plate coated with the positive electrode active material and the negative electrode active material, respectively, with a separator interposed between the positive electrode plate and the negative electrode plate, and a sealed packaging or battery case accommodating the electrode assembly together with an electrolyte solution.

In general, lithium secondary batteries may be classified into can-type secondary batteries in which the electrode assembly is included in a metal can and pouch-type secondary batteries in which the electrode assembly is included in a pouch of an aluminum laminate sheet, according to the shape of the battery case.

Recently, secondary batteries have been widely used in medium and large devices such as electric vehicles and energy storage systems (ESSs) for driving and storing energy, as well as in small devices such as portable electronic devices. A plurality of secondary batteries may be electrically connected and stored inside a module case, thereby forming a battery module. At this time, each secondary battery included in one battery module may be referred to as a battery cell. In addition, multiple battery modules may be connected to each other to form a battery pack.

However, when a battery pack includes a plurality of battery modules and each battery module includes a plurality of battery cells, it may be vulnerable to a thermal chain reaction between battery modules or between battery cells. For example, when an event such as thermal runaway occurs within a single battery module, the thermal runaway must be suppressed from propagating to other battery modules or other battery cells. If the propagation of thermal runaway between battery modules or battery cells is not properly suppressed, an event occurring in a specific battery module or battery cell may cause a chain thermal reaction in other battery modules or other battery cells, potentially causing an explosion or fire or increasing its scale.

In particular, when an event such as thermal runaway occurs in a single battery module, gas or flame may be randomly discharged to the outside. If the discharge of gas or flame is not properly controlled, the gas or flame may be discharged toward other battery modules, potentially causing a thermal chain reaction in the other battery modules. In particular, a module terminal may be present at the front side of the battery module, and a component such as a module bus bar for electrical connection with other battery modules or battery packs may be present. Therefore, if flame is discharged to the front side of the battery module, the module terminals may be damaged and an electrical short may occur within the battery pack. In addition, since other battery modules may be present at the front side of the battery module, if flame is discharged to the front side of a specific battery module, the discharged flame may be directed to other battery modules, easily causing a fire to spread between battery modules.

If thermal transfer between battery modules or battery cells is not properly controlled, a sudden voltage drop may occur in the battery module or battery pack. This may lead to a sudden shutdown of the device in which the battery module or battery pack is mounted, resulting in unexpected damage. For example, if a voltage drop occurs suddenly in a battery pack while an electric vehicle is in operation, there is no time to move the vehicle to a safe location.

Furthermore, if thermal propagation between battery modules or cells is not properly controlled to cause a sudden fire or explosion, there is a high possibility of causing casualties to the users. For example, when thermal runaway occurs in an electric vehicle, if a certain amount of time is not allowed before a full-blown fire develops, occupants may not be able to safely escape.

### DISCLOSURE

### Technical Problem

Therefore, the present disclosure is designed to solve the problems of the related art, and therefore the present disclosure is directed to providing a battery pack with an improved structure to appropriately control the emission of flame, etc. generated inside a battery module, and a vehicle including the same.

In addition, the present disclosure is directed to providing a structure capable of preventing damage to the exterior of a battery pack when a thermal event occurs.

In addition, the present disclosure is directed to providing a structure capable of preventing flames or ignitable particles from being emitted outside the battery pack when a thermal event occurs.

In addition, the present disclosure is directed to providing a structure capable of suppressing heat propagation between battery modules.

However, the technical problems that the present disclosure seeks to solve are not limited to the problems described above, and other problems not mentioned herein will be clearly understood by those skilled in the art from the following description.

### Technical Solution

In one aspect of the present disclosure, there is provided a battery pack comprising: a case providing an inner space and having a base plate; a battery module installed on the base plate and including a rear end cover having a venting hole; a first venting channel configured to cover the rear end cover and having a first inlet hole in communication with the venting hole and a first outlet hole; and a second venting channel configured to cover one side of the battery module, coupled to the first venting channel, and having a second inlet hole in communication with the first outlet hole and a second outlet hole.

The battery pack may further comprise a third venting channel coupled to the second venting channel and having a third inlet hole in communication with the second outlet hole and a third outlet hole.

The case may further include a first partition wall configured to partition the inner space of the case and cover a front surface of the battery module, and the third venting channel may extend along the first partition wall.

The third venting channel may be coupled to the first partition wall.

The case may include a side wall installed on the base plate, and the third outlet hole in the third venting channel may communicate with the side wall.

The battery pack may further comprise a venting device installed in the case, and the third outlet hole of the third venting channel may communicate with the venting device.

The battery pack may further comprise a second partition wall configured to partition the inner space of the case and extend along a front and rear direction, and the second venting channel may be coupled to the second partition wall.

The battery pack may further comprise a fireproofing member located between the first outlet hole and the second inlet hole.

The fireproofing member may have a score line.

The case may include a pack cover located on the battery module, and the second venting channel may be located between the battery module and the pack cover.

The first venting channel may be fastened to the rear end cover.

The battery module may further include a power terminal protruding forward.

In another aspect of the present disclosure, there is also provided a vehicle, comprising the battery pack according to the present disclosure.

### Advantageous Effects

According to at least one of the embodiments of the present disclosure, when gas or flame is generated inside the battery module, the discharge of the gas or flame may be appropriately controlled.

According to at least one of the embodiments of the present disclosure, damage to the exterior of a battery pack may be prevented even if a thermal event occurs.

According to at least one of the embodiments of the present disclosure, the electrical safety of the battery pack may be improved.

According to at least one of the embodiments of the present disclosure, heat propagation between battery modules may be suppressed when a thermal event occurs.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing a battery pack according to an embodiment of the present disclosure.
FIGS. 2 and 3 are exploded views showing some components of the battery pack of FIG. 1.
FIG. 4 is a diagram showing a modified embodiment of FIG. 3.
FIG. 5 is a diagram showing a battery module of FIG. 3.
FIG. 6 is a diagram showing the battery module of FIG. 5, in which some components are exploded.
FIG. 7 is an enlarged view showing a portion of the configuration of FIG. 6.
FIG. 8 is a diagram showing the configuration of FIG. 7 viewed in a different direction.
FIG. 9 is a diagram showing a modified embodiment of FIG. 8.
FIGS. 10 and 11 are diagrams showing a first venting channel of FIG. 3.
FIG. 12 is a diagram showing a second venting channel of FIG. 3.
FIG. 13 is a cross-sectional view taken along the cutting line E-E' of FIG. 12.
FIG. 14 is a cross-sectional view taken along the cutting line F-F' of FIG. 12.
FIG. 15 is a diagram showing a third venting channel of FIG. 3.
FIG. 16 is a diagram showing the coupling of a battery module, a first venting channel, a second venting channel, and a third venting channel.
FIG. 17 is a diagram showing a modified embodiment of FIG. 16.
FIG. 18 is a cross-sectional view taken along the cutting line C-C' of FIG. 2.
FIG. 19 is a cross-sectional view taken along section line A-A' of FIG. 2.
FIG. 20 is a diagram showing the change in FIG. 19 when a thermal event occurs.
FIG. 21 is a cross-sectional view taken along the cutting line B-B' of FIG. 2.
FIG. 22 is a cross-sectional view taken along the cutting line D-D' of FIG. 2.
FIG. 23 is a diagram showing the movement of a venting gas.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

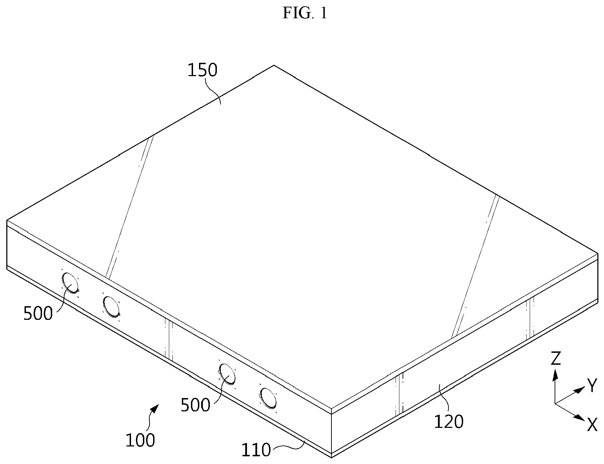

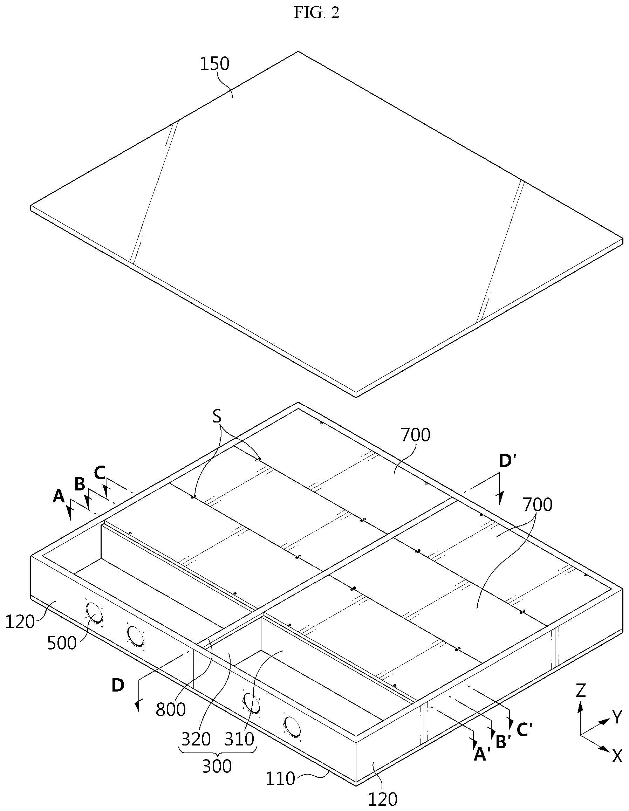

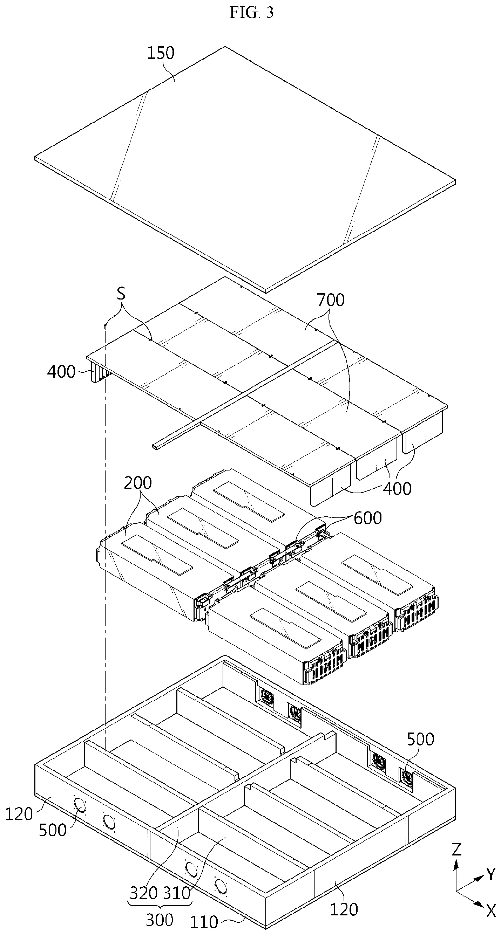

FIG. 1 is a diagram showing a battery pack according to an embodiment of the present disclosure. FIGS. 2 and 3 are exploded views showing some components of the battery pack of FIG. 1.

Referring to FIGS. 1 to 3, a battery pack according to an embodiment of the present disclosure may include a case 100. The case 100 may have a rectangular parallelepiped shape. The case 100 may provide a space therein. The case 100 may include a base plate 110. The base plate 110 may have a square plate shape.

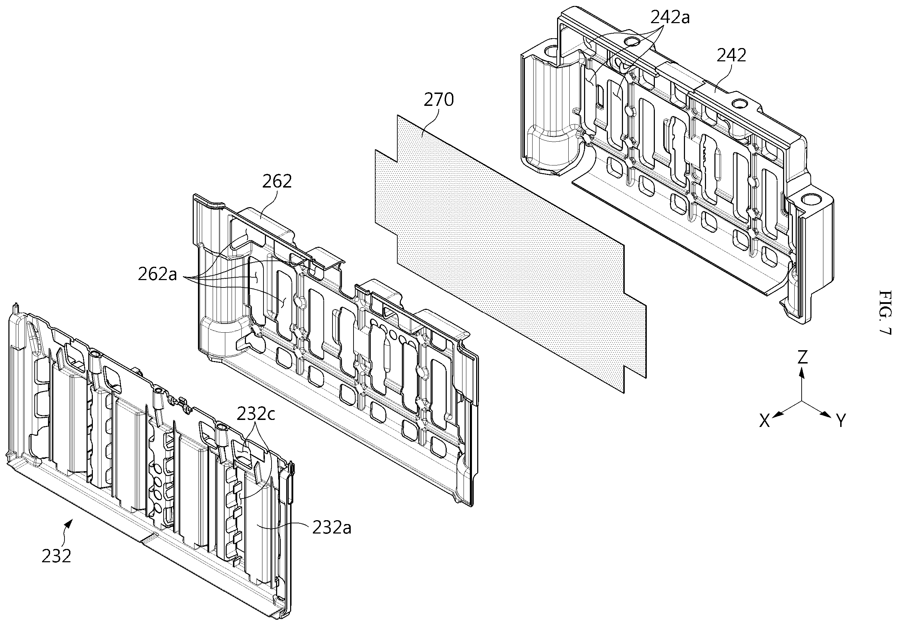

The battery pack according to an embodiment of the present disclosure may include a battery module 200. The battery module 200 may be located inside the case 100. The battery module 200 may be installed on the base plate 110. The battery module 200 may be provided in plurality. The battery module 200 may include a rear end cover 242. The rear end cover 242 may include a third venting hole 242a (see FIG. 7). When a thermal event occurs inside the battery module 200, a venting gas G may be discharged to the outside of the battery module 200 through the third venting hole 242a.

The battery pack according to an embodiment of the present disclosure may include a first venting channel 400. The first venting channel 400 may provide a space therein. The first venting channel 400 may be located at the rear of the rear end cover 242. The first venting channel 400 may face the rear end cover 242. The first venting channel 400 may cover the rear end cover 242. The first venting channel 400 may be fastened, coupled, attached, or fixed to the rear end cover 242. The first venting channel 400 may be fastened, coupled, attached, or fixed to the battery module 200. The first venting channel 400 may have a first inlet hole 411 that communicates with the third venting hole 242a. In addition, the first venting channel 400 may have a first outlet hole 412.

The battery pack according to an embodiment of the present disclosure may include a second venting channel 700. The second venting channel 700 may provide a space therein. The second venting channel 700 may cover one surface of the battery module 200. For example, the second venting channel 700 may cover at least one of the upper surface and the side surface of the battery module 200. The second venting channel 700 may be fastened, coupled, attached, or fixed to the first venting channel 400. The second venting channel 700 may be fastened, coupled, attached, or fixed to the battery module 200. The second venting channel 700 may have a second inlet hole 711 that communicates with the first outlet hole 412. In addition, the second venting channel 700 may have a second outlet hole 712.

If a thermal event occurs inside the battery module 200, the venting gas G or ignitable particle F may be discharged out through the third venting hole 242a of the rear end cover 242. The venting gas G or ignitable particle F may be introduced into the first inlet hole 411 of the first venting channel 400 and may flow inside the first venting channel 400. The venting gas G or ignitable particle F may be discharged out through the first outlet hole 412 of the first venting channel 400 and may be introduced into the second venting channel 700 through the second inlet hole 711 of the second venting channel 700. The venting gas G or ignitable particle F may flow inside the second venting channel 700. The venting gas G or ignitable particle F may be discharged out through the second outlet hole 712 of the second venting channel 700. The venting direction of the venting gas G or ignitable particle F may be easily controlled by the first venting channel 400 and the second venting channel 700. The venting gas G or ignitable particle F may flow through the first venting channel 400 and the second venting channel 700, during which its temperature and pressure may be lowered. The thermal safety of the battery pack may be improved by the first venting channel 400 and the second venting channel 700.

Referring to FIGS. 1 to 3, the case 100 may provide a space therein. The case 100 may include a base plate 110, a side wall 120, and a pack cover 150. The base plate 110 may have a rectangular shape. The base plate 110 may have a flat shape. The base plate 110 may form an outer appearance of the battery pack. The base plate 110 may provide an inner space of the battery pack.

The pack cover 150 may have a rectangular plate shape. The pack cover 150 may have a flat plate shape. The pack cover 150 may form the outer appearance of the battery pack. The pack cover 150 may cover the inner space of the battery pack.

The partition wall 300 may include a first partition wall 320 and a second partition wall 310. The partition wall 300 may be provided in plurality. The partition wall 300 may be installed, fastened, fixed, coupled, or attached to the upper surface of the base plate 110. The partition wall 300 may partition the inner space of the battery pack. The battery module 200 or the battery cell 220 may be positioned in the space partitioned by the partition wall 300.

The venting device 500 may be installed on the side wall 120. For example, the venting device 500 may be installed on the side wall 120 at the front side. For example, the venting device 500 may be a gas valve. The venting device 500 may open when the pressure inside the case 100 increases to discharge gas. In addition, the venting device 500 may block external air from flowing into the case 100. The venting device 500 may be provided in plurality.

The first venting channel 400 may be provided in plurality. The plurality of first venting channels 400 may be provided in one-to-one correspondence with the plurality of battery modules 200. The second venting channel 700 may be provided in plurality. The plurality of second venting channels 700 may be provided in one-to-one correspondence with the plurality of first venting channels 400. The plurality of second venting channels 700 may be provided in one-to-one correspondence with the plurality of battery modules 200.

Referring to FIGS. 1 to 3, the second venting channel 700 may be located between the pack cover 150 and the battery module 200. The second venting channel 700 may prevent the pack cover 150 from being directly damaged by the venting gas G. As a result, the venting gas G may be prevented from being discharged to the outside of the battery pack through the pack cover 150.

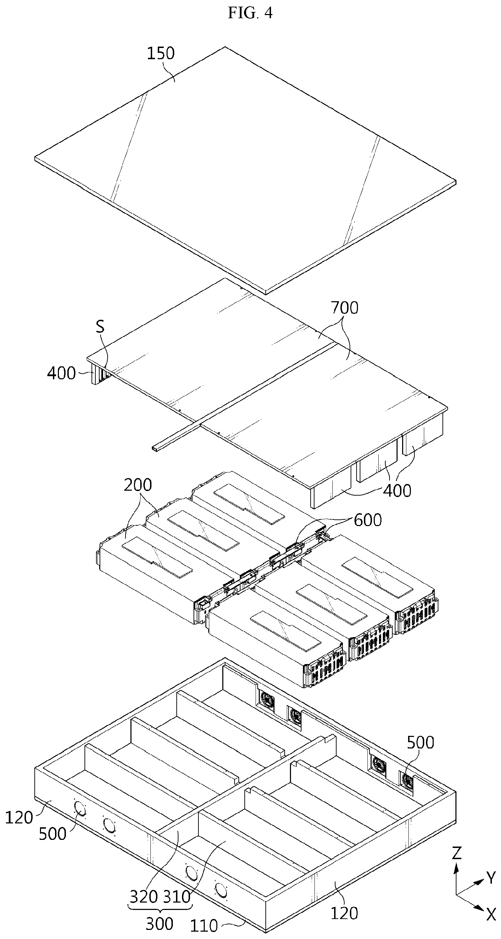

FIG. 4 is a diagram showing a modified embodiment of FIG. 3. Referring to FIG. 4, one second venting channel 700 may be coupled with a plurality of first venting channels 400. One second venting channel 700 may correspond to a plurality of battery modules 200. For example, one second venting channel 700 may be coupled with three first venting channels 400. Also, one second venting channel 700 may cover three battery modules 200.

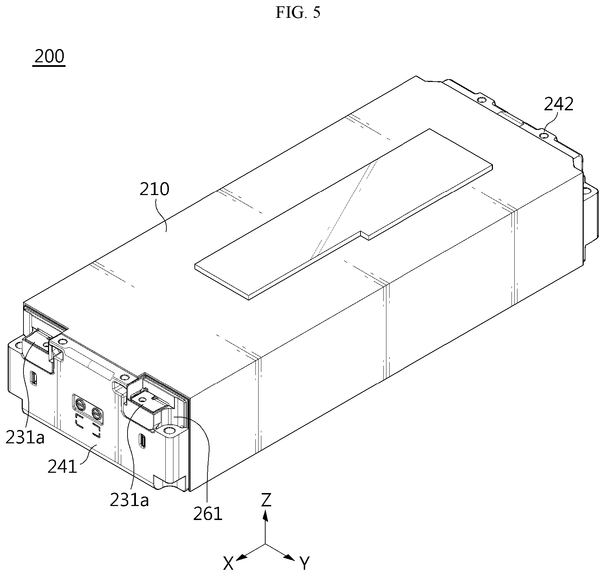

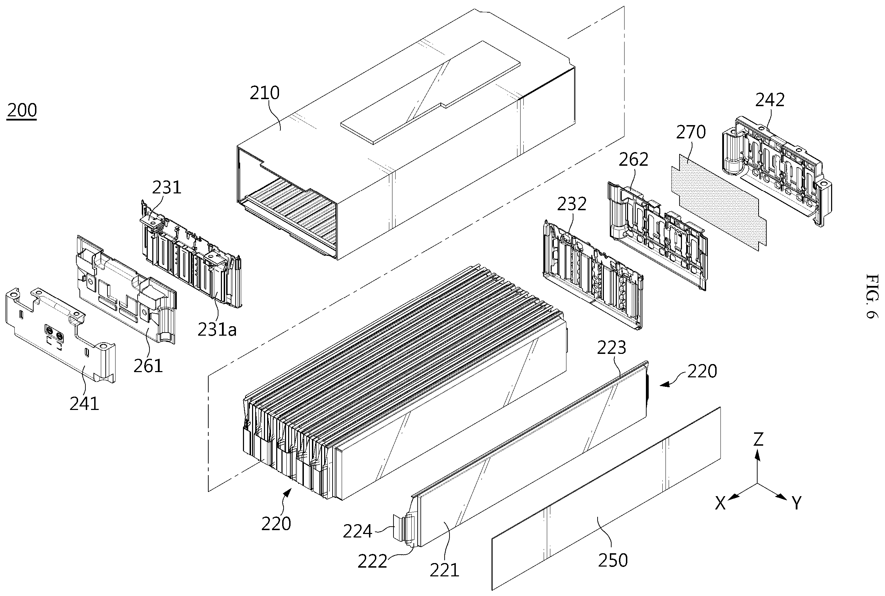

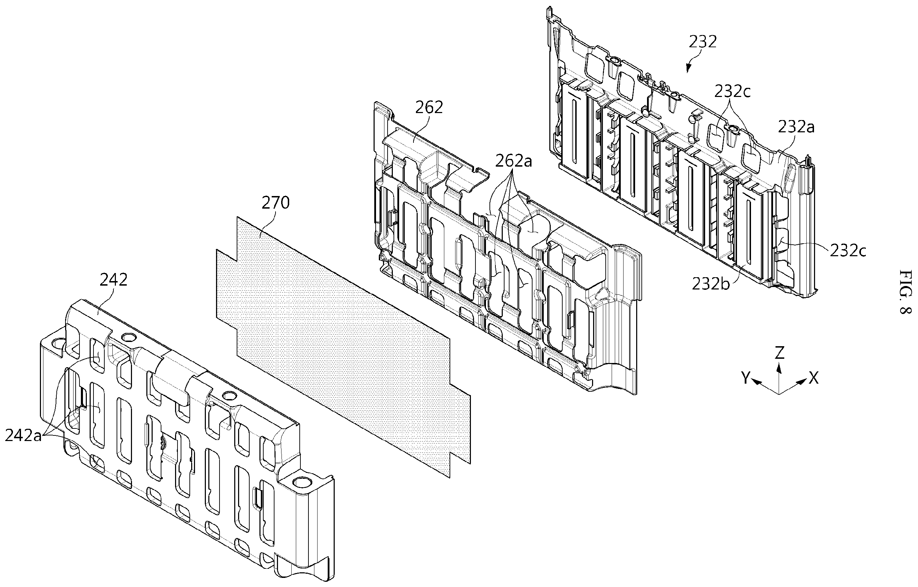

FIG. 5 is a diagram showing a battery module of FIG. 3. FIG. 6 is a diagram showing the battery module 200 of FIG. 5, in which some components are exploded. FIG. 7 is an enlarged view showing a portion of the configuration of FIG. 6. FIG. 8 is a diagram showing the configuration of FIG. 7 viewed in a different direction.

Referring to FIGS. 5 to 8, the battery module 200 may include a module case 210. The module case 210 may have a rectangular parallelepiped shape. The module case 210 may provide a space therein. The module case 210 may have a top plate, a bottom plate, and a pair of side plates. In addition, the module case 210 may have a shape in which the front and rear surfaces are open.

The battery cell 220 may be accommodated inside the module case 210. The plurality of battery cells 220 may be stacked along the right and left direction or the Y-axis direction. The battery cell 220 may include an accommodation portion 221 accommodating an electrode assembly, a first sealing portion 222 protruding forward and rearward from the accommodation portion 221, and a second sealing portion 223 protruding upward from the accommodation portion 221. In addition, the battery cell 220 may include electrode leads 224 protruding forward and rearward from the first sealing portion 222, respectively. Each battery cell 220 may extend along the front and rear direction or the X-axis direction. The electrode leads 224 may protrude forward and rearward from each battery cell 220.

The battery cell 220 may refer to a secondary battery. In particular, the battery cell 220 may be a pouch-type secondary battery. However, the shape of the battery cell 220 is not limited to a pouch shape, and the battery cell 220 may have various shapes such as a cylindrical shape or a rectangular parallelepiped shape. The battery cell 220 may be provided in plurality.

The pad 250 may be disposed between the plurality of battery cells 220. The pad 250 may be arranged between at least some of the battery cells 220 and/or at the periphery of the stack. For example, the pad 250 may be configured to be arranged between every four battery cells 220 stacked in the right and left direction.

The pad 250 may contain an elastic material to enable swelling absorption of the battery cell 220. For example, the pad 250 may contain a foam material such as polyurethane. Alternatively, the pad 250 may contain a material capable of blocking heat or flame. For example, the pad 250 may contain with an insulating or fire-retardant material such as silicone or mica.

The front bus bar frame assembly 231 may be provided at the front of the plurality of battery cells 220. The front bus bar frame assembly 231 may be electrically connected to the front electrode leads 224 of the plurality of battery cells 220.

The rear bus bar frame assembly 232 may be provided at the rear of the plurality of battery cells 220. The rear bus bar frame assembly 232 may be electrically connected to the rear electrode lead 224 of the plurality of battery cells 220.

The front end cover 241 may be coupled to the front of the module case 210. The front end cover 241 may cover the front surface of the module case 210. The front end cover 241 may have a square shape.

The rear end cover 242 may be coupled to the rear of the module case 210. The rear end cover 242 may cover the rear surface of the module case 210. The rear end cover 242 may have a square shape.

The front insulation cover 261 may be located between the front end cover 241 and the front bus bar frame assembly 231. The front insulation cover 261 may electrically insulate the front bus bar frame assembly 231 and the front end cover 241.

The rear insulation cover 262 may be located between the rear end cover 242 and the rear bus bar frame assembly 232. The rear insulation cover 262 may electrically insulate the rear bus bar frame assembly 232 and the rear end cover 242.

The rear bus bar frame assembly 232 may include a frame 232a and a bus bar 232b. The bus bar 232b may be installed on the frame 232a. The bus bar 232b may be electrically connected to the rear electrode leads 224 of the plurality of battery cells 220. The bus bar 232b may be provided in plurality. The plurality of bus bars 232b may be arranged along the right and left direction or the Y-axis direction. In addition, the frame 232a may have a first venting hole 232c. The first venting hole 232c may be a through hole. The first venting hole 232c may face the first sealing portion 222 at the rear side of the battery cell 220. The first venting hole 232c may be provided in plurality. Some of the plurality of first venting holes 232c may be arranged between two adjacent bus bars 232b.

Referring to FIGS. 3 and 5 to 8, the battery module 200 may include a power terminal 231a protruding forward. The power terminal 231a may be provided at the front bus bar frame assembly 231. The power terminal 231a may protrude from the front bus bar assembly 231. The power terminal 231a may be provided in a pair. The power terminals 231a may be exposed to the outside of the battery module 200.

The power terminal 231a may be electrically connected to the power terminal 231a of a neighboring battery module 200. The inter-bus bar 600 may electrically connect neighboring battery modules 200.

Major components such as the power terminal 231a, the control terminal, and the inter-bus bar 600 may be arranged at the front side of the battery module 200. Since the venting gas G and the ignitable particles F are discharged to the rear side of the battery module 200, damage to the front side of the battery module 200 may be minimized. Since damage to the front side of the battery module 200 is minimized, thermal event propagation to neighboring battery modules 200 may be suppressed.

Referring to FIGS. 5 to 8, the rear insulation cover 262 may have a second venting hole 262a. The second venting hole 262a may be a through hole. The second venting hole 262a may face the rear bus bar frame assembly 232 or the first venting hole 232c. The second venting hole 262a may be in communication with the first venting hole 232c. The second venting hole 262a may be provided in plurality. The plurality of second venting holes 262a may be in communication with the plurality of first venting holes 232c.

Referring to FIGS. 5 to 8, the battery module 200 may further include a fireproofing sheet 270. The fireproofing sheet 270 may contain a material having high heat resistance or fire resistance. The fireproofing sheet 270 may be located at the inner side of the rear end cover 242. The fireproofing sheet 270 may be located between the rear end cover 242 and the rear insulation cover 262. The fireproofing sheet 270 may be fixed between the rear end cover 242 and the rear insulation cover 262.

The fireproofing sheet 270 may be located between the third venting hole 242a and the second venting hole 262a. The fireproofing sheet 270 may cover the plurality of third venting holes 242a and the plurality of second venting holes 262a.

When a thermal event occurs, the internal pressure of the module case 210 may increase due to the venting gas G and the ignitable particle F. This may cause a portion of the fireproofing sheet 270 to rupture. Also, due to the rupture of the fireproofing sheet 270, some of the second venting holes 262a and some of the third venting holes 242a may communicate with each other, and the venting gas G and the ignitable particle F may be discharged. In addition, the non-ruptured portion of the fireproofing sheet 270 may still cover the remaining second venting holes 262a and the remaining third venting holes 242a. This may prevent the venting gas G and the ignitable particle F discharged to the outside of the battery module 200 from flowing into the battery module 200.

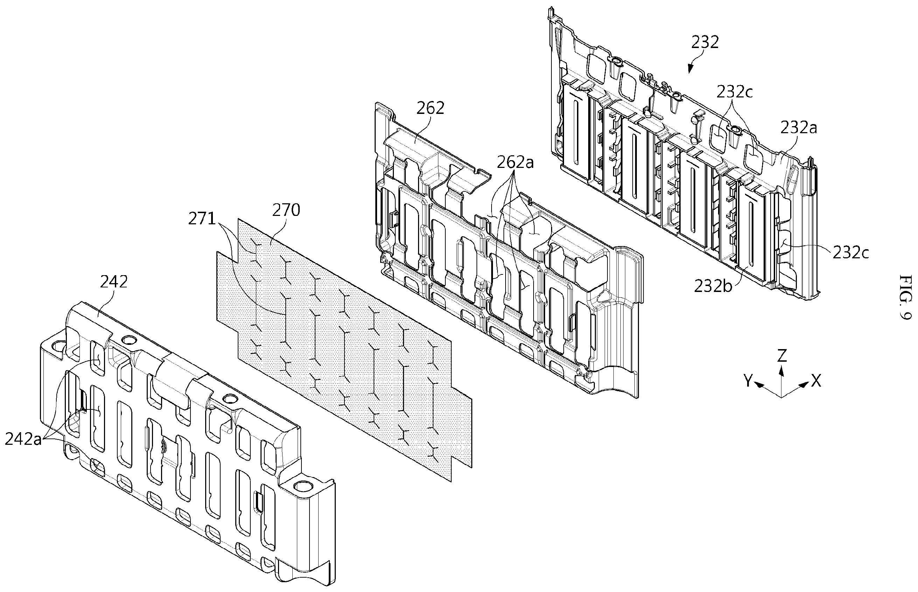

FIG. 9 is a diagram showing a modified embodiment of FIG. 8. Referring to FIG. 9, the fireproofing sheet 270 may have a score line 271. The score line 271 may be used as a term including and collectively referring to a perforated line 271, a notching line 271, a cutting line 271, a shredding line 271, a tear line 271, or a separation line 271. The score line 271 may be configured to be easily separated by a pressure applied to the fireproofing sheet 270.

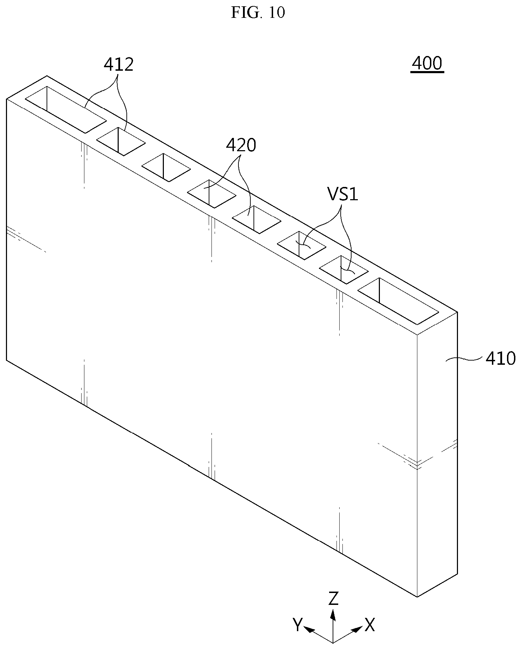

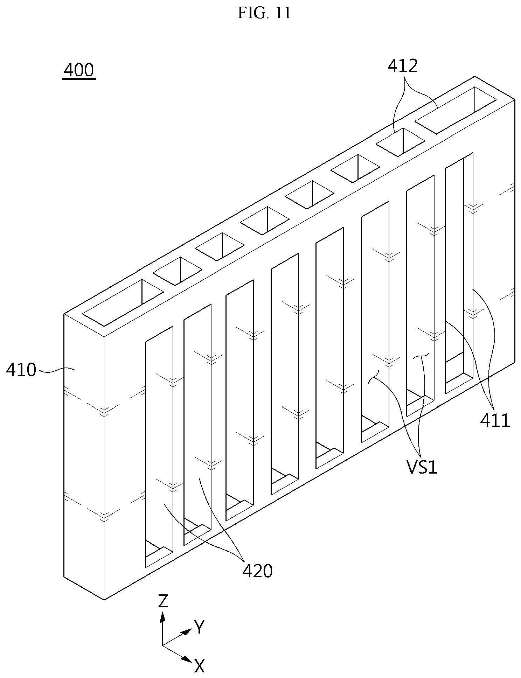

FIGS. 10 and 11 are diagrams showing the first venting channel 400 of FIG. 3. Referring to FIGS. 10 and 11, the first venting channel 400 may have a rectangular parallelepiped shape. The first venting channel 400 may include a first body 410. The first body 410 may form an outer appearance of the first venting channel 400. The first body 410 may provide a space therein. The first venting channel 400 may have a first inlet hole 411 formed in the first body 410 and communicating with the third venting hole 242a. The third venting hole 242a and the first inlet hole 411 may be arranged to face each other. The first venting channel 400 may have a first outlet hole 412 formed in the upper surface of the first body 410.

The first venting channel 400 may include a first partition 420. The first partition 420 may partition the interior of the first body 410. The first partition 420 may extend along the vertical direction or the Z-axis direction. The first partition 420 may be provided in plurality. The plurality of first partitions 420 may be arranged along the right and left direction or the Y-axis direction. In this case, each partitioned space may be referred to as a first venting space VS1.

Due to the plurality of first venting spaces VS1, the range of space through which the venting gas G and the ignitable particle F may propagate may be further restricted. This may further suppress the propagation of thermal events.

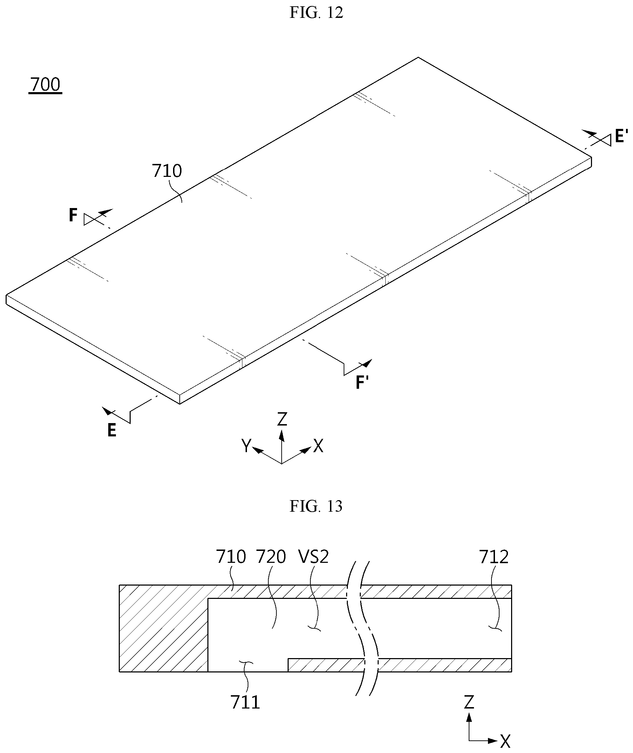

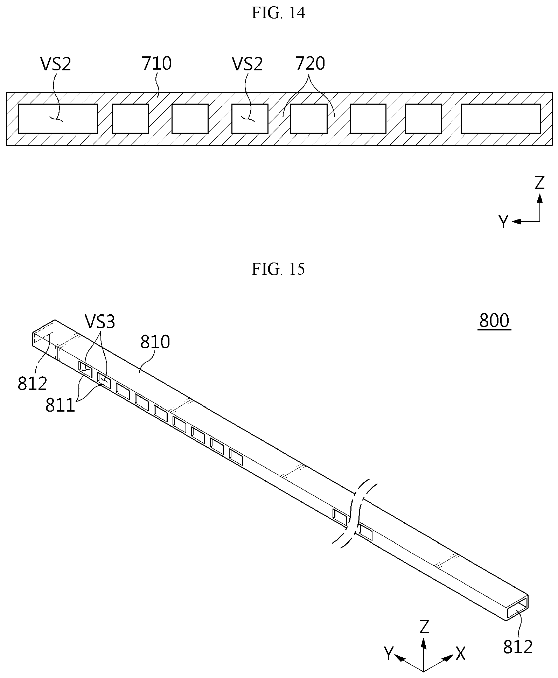

FIG. 12 is a diagram showing the second venting channel 700 of FIG. 3. FIG. 13 is a cross-sectional view taken along the cutting line E-E' of FIG. 12. FIG. 14 is a cross-sectional view taken along the cutting line F-F' of FIG. 12. Referring to FIGS. 12 to 14, the second venting channel 700 may have a rectangular parallelepiped shape. The second venting channel 700 may include a second body 710. The second body 710 may form an outer appearance of the second venting channel 700. The second body 710 may provide a space therein. The second venting channel 700 may have a second inlet hole 711 formed in the second body 710 and communicating with the first outlet hole 412. The first outlet hole 412 and the second inlet hole 711 may be arranged to face each other. The second venting channel 700 may have a second outlet hole 712 formed in the front surface of the second body 710.

The second venting channel 700 may include a second partition 720. The second partition 720 may partition the interior of the second body 710. The second partition 720 may extend along the front and rear direction or the X-axis direction. The second partition 720 may be provided in plurality. The plurality of second partitions 720 may be arranged along the right and left direction or the Y-axis direction. In this case, each partitioned space may be referred to as a second venting space VS2.

Due to the plurality of second venting spaces VS2, the range of space through which the venting gas G and the ignitable particle F may propagate may be further limited. As a result, the propagation of thermal events may be further suppressed.

FIG. 15 is a diagram showing the third venting channel 800 of FIG. 3. Referring to FIG. 15, the third venting channel 800 may have a rectangular parallelepiped shape. The third venting channel 800 may include a third body 810. The third body 810 may form an outer appearance of the third venting channel 800. The third body 810 may extend long along the right and left direction or the Y-axis direction. The third body 810 may provide a space therein. In this case, the inner space of the third body 810 may be referred to as a third venting space VS3. The third venting channel 800 may have a third inlet hole 811 formed in the third body 810 and communicating with the second outlet hole 712. The second outlet hole 712 and the third inlet hole 811 may be arranged to face each other. The third venting channel 800 may have a third outlet hole 812 formed at the left end of the third body 810. The third venting channel 800 may have a third outlet hole 812 formed at the right end of the third body 810.

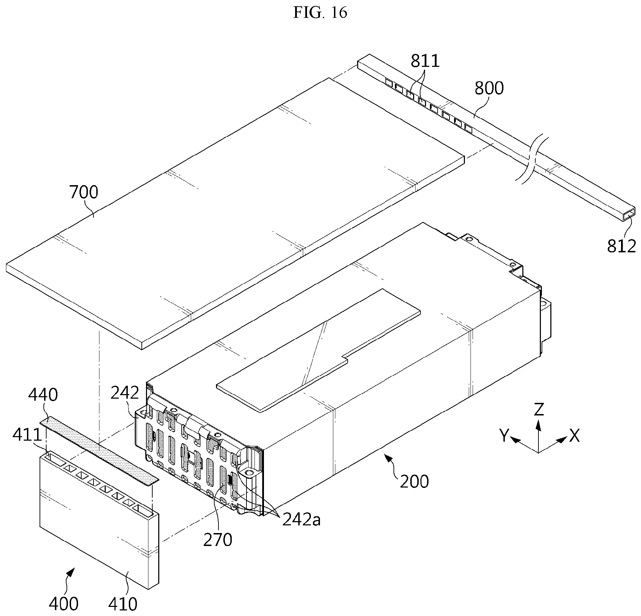

FIG. 16 is a diagram showing the coupling of a battery module 200, a first venting channel 400, a second venting channel 700, and a third venting channel 800. Referring to FIGS. 10 to 16, the first venting channel 400 and the second venting channel 700 may be fastened, coupled, or attached. The first venting channel 400 and the second venting channel 700 may be coupled by welding. Alternatively, the first venting channel 400 and the second venting channel 700 may be coupled by bolting. The plurality of first outlet holes 412 and the plurality of second inlet holes 711 may be arranged in one-to-one correspondence. Each of the plurality of first outlet holes 412 and each of the plurality of second inlet holes 711 may be arranged to face each other. The plurality of first venting spaces VS1 and the plurality of second venting spaces VS2 may be arranged in one-to-one correspondence.

The fireproofing member 440 may be located between the first venting channel 400 and the second venting channel 700. The fireproofing member 440 may have a sheet shape. The fireproofing member 440 may contain a material having high fire resistance. The fireproofing member 440 may contain a material having high heat resistance. The fireproofing member 440 may be fastened, coupled, fixed, or attached to the upper surface of the first venting channel 400. The fireproofing member 440 may be located between the first outlet hole 412 and the second inlet hole 711. The fireproofing member 440 may be located between the first venting space VS1 and the second venting space VS2.

When a thermal event occurs, the pressure of some of the plurality of first venting spaces VS1 may increase. The increased pressure may cause some of the fireproofing members 440 to rupture. As the fireproofing members 440 ruptures, the first venting space VS1 and the second venting space VS2 may communicate with each other. At this time, the fireproofing members 440 covering the first venting space VS1, where the pressure does not increase, may not rupture.

Referring to FIGS. 10 to 16, the second venting channel 700 and the third venting channel 800 may be fastened, coupled, or attached. The second venting channel 700 and the third venting channel 800 may be coupled by welding. Alternatively, the second venting channel 700 and the third venting channel 800 may be coupled by bolting. The plurality of second outlet holes 712 and the plurality of third inlet holes 811 may be arranged in one-to-one correspondence. The plurality of second outlet holes 712 and the plurality of third inlet holes 811 may be arranged to face each other. The plurality of second outlet holes 712 and the plurality of third inlet holes 811 may communicate with each other. The plurality of second venting spaces VS2 may communicate with the third venting space VS3.

Referring to FIGS. 10 to 16, the first venting channel 400 may be fastened, coupled, attached, or fixed to the rear end cover 242. For example, the first venting channel 400 may be coupled to the rear end cover 242 by bolting. Alternatively, the first venting channel 400 may be coupled to the rear end cover 242 by welding.

Referring to FIGS. 3, 4, and 16, the third venting channel 800 may extend along the first partition wall 320. The third venting channel 800 may be located on the first partition wall 320. The third venting channel 800 may be fastened, coupled, fixed, or attached to the top of the first partition wall 320. For example, the third venting channel 800 and the first partition wall 320 may be coupled by welding. Alternatively, the third venting channel 800 and the first partition wall 320 may be coupled by bolting.

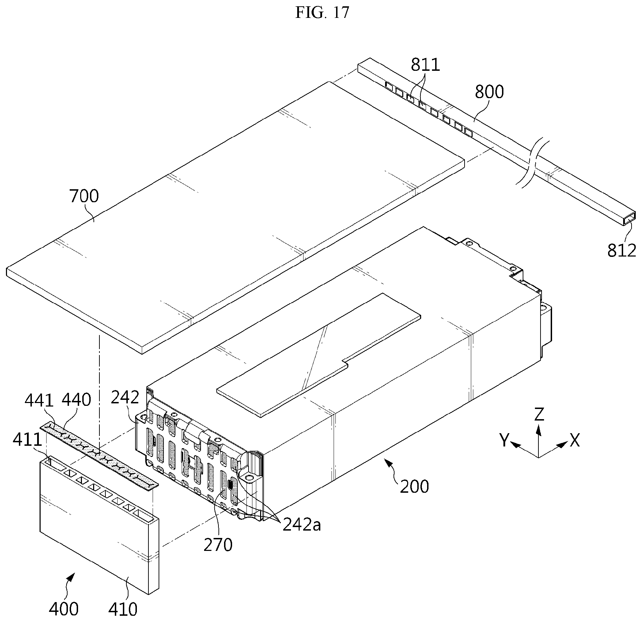

FIG. 17 is a diagram showing a modified embodiment of FIG. 16. Referring to FIG. 17, the fireproofing member 440 may have a score line 441. The score line 441 may be used as a term including and collectively referring to a perforated line 441, a notching line 441, a cutting line 441, a shredding line 441, a tear line 441, or a separation line 441. The score line 441 may be configured to be easily separated by a pressure applied to the fireproofing member 440. The score line 441 may be provided at every first outlet hole 412. The score line 441 may be provided at every second inlet hole 711. The fireproofing member 440 may be ruptured even under a smaller pressure due to the score line 441.

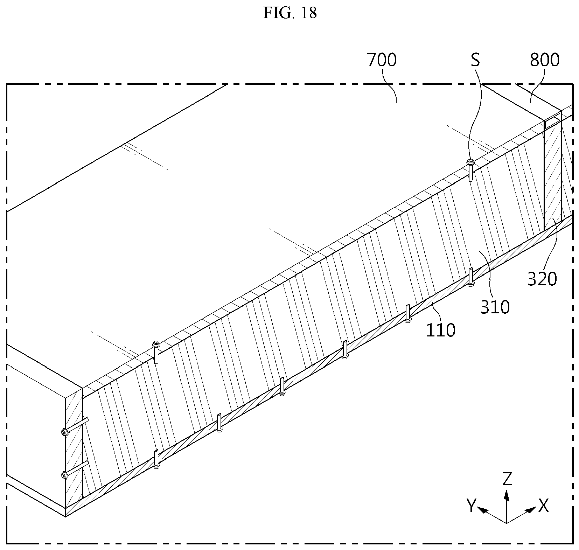

FIG. 18 is a cross-sectional view taken along the cutting line C-C' of FIG. 2. Referring to FIG. 18, the second venting channel 700 may be fastened, coupled, fixed, or attached to the second partition wall 310. For example, the second venting channel 700 and the second partition wall 310 may be coupled by welding. Alternatively, the second venting channel 700 and the second partition wall 310 may be coupled by a fastening member S. The second venting channel 700 may be located on the second partition wall 310. The second venting channel 700 may be coupled to the top of the second partition wall 310.

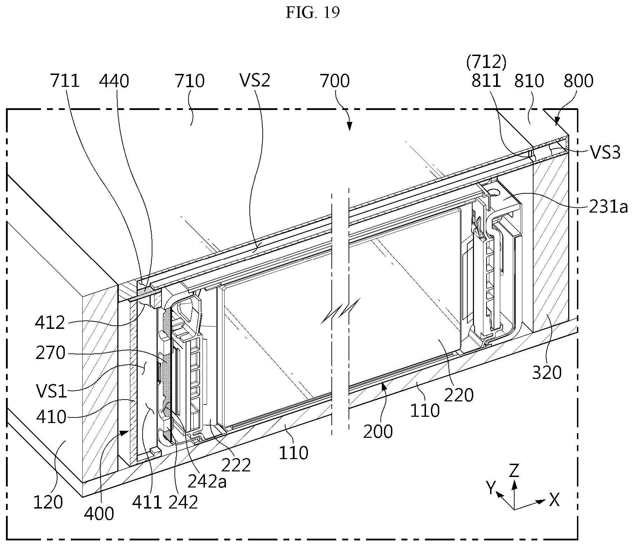

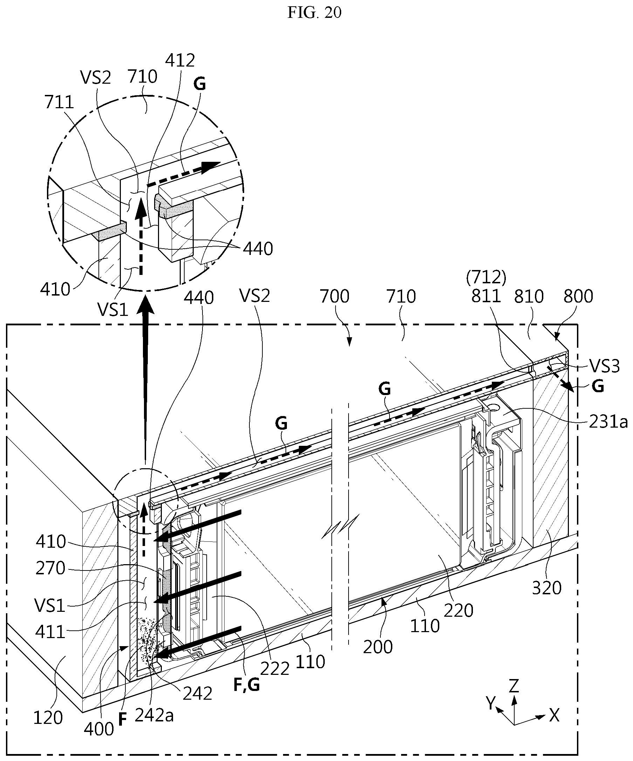

FIG. 19 is a cross-sectional view taken along section line A-A' of FIG. 2. FIG. 20 is a diagram showing the change in FIG. 19 when a thermal event occurs. Referring to FIGS. 19 and 20, when a thermal event occurs in the battery cell 220, the venting gas G or the ignitable particle F may be discharged out through the first sealing portion 222. The venting gas G or ignitable particle F may rupture the fireproofing sheet 270 and be discharged through the third venting hole 242a.

The venting gas G or ignitable particle F discharged through the third venting hole 242a may flow into the first venting space VS1 of the first venting channel 400 through the first inlet hole 411. The ignitable particle F may lose energy and fall down after colliding with the first body 410.

The venting gas G may rise upward. The venting gas G may rupture the fireproofing member 440. As a result, the first venting space VS1 and the second venting space VS2 may communicate with each other. The venting gas G may be discharged from the first venting channel 400 through the first outlet hole 412. The venting gas G may be introduced into the second venting space VS2 of the second venting channel 700 through the second inlet hole 711. The venting gas G may flow along the second venting space VS2 in the front and rear direction or the X-axis direction.

The venting gas G may be discharged from the second venting channel 700 through the second outlet hole 712. The venting gas G may be introduced into the third venting space VS3 of the third venting channel 800 through the third inlet hole 811.

The ignitable particles F may be prevented from being discharged outside the battery pack by gathering beneath the first venting space VS1. As the venting gas G moves along a long path, its energy and temperature may be lowered. This may improve the thermal safety of the battery pack.

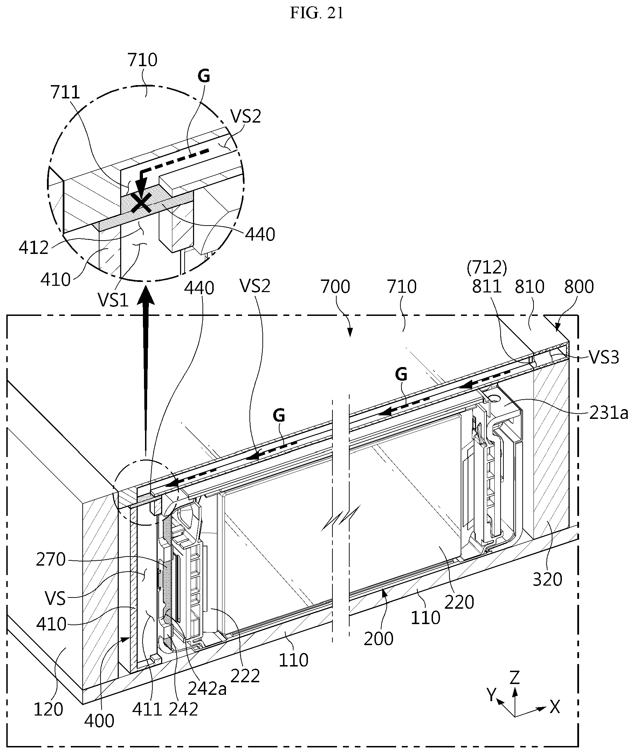

FIG. 21 is a cross-sectional view taken along the cutting line B-B' of FIG. 2. Referring to FIGS. 19 to 21, the venting gas G introduced into the third venting space VS3 may flow back into the adjacent second venting space VS2. The back-flowing venting gas G may flow along the second venting space VS2 toward the second inlet hole 711. The pressure of the back-flowing venting gas G may be lower than the pressure of the venting gas G discharged in the forward direction when a thermal event occurs. At this time, the fireproofing member 440 may block the backflow of the venting gas G. The fireproofing member 440 may be ruptured by the pressure of the venting gas G discharged in the forward direction when a thermal event occurs, but may not be ruptured by the pressure of the back-flowing venting gas G.

Since the fireproofing member 440 blocks the backflow of the venting gas G, the venting gas G may be prevented from flowing into the battery module 200 and propagating the thermal event.

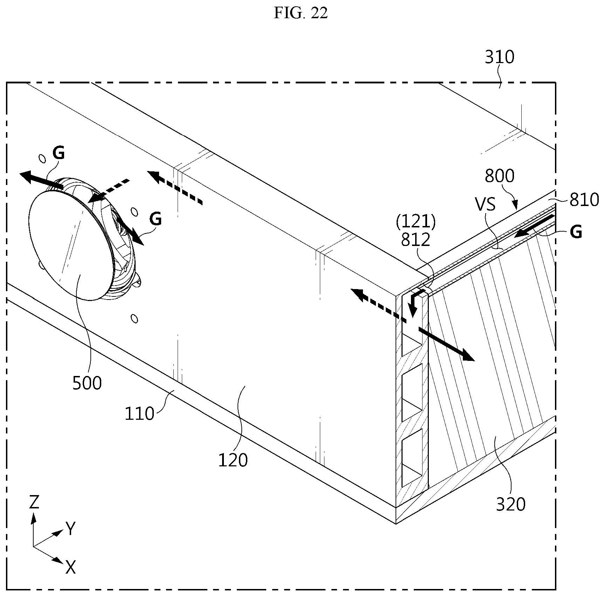

FIG. 22 is a cross-sectional view taken along the cutting line D-D' of FIG. 2. Referring to Fig. 22, the third venting channel 800 may be communicated with the side wall 120. The side wall 120 may provide a space therein. The side wall 120 may have a fourth inlet hole 121 that communicates with the third outlet hole 812.

The venting gas G may be discharged from the third venting channel 800 through the third outlet hole 812. The venting gas G may be introduced into the side wall 120 through the fourth inlet hole 121.

The venting device 500 may be communicated with the inner space of the side wall 120. The venting gas G introduced into the side wall 120 may be discharged to the outside of the battery pack through the venting device 500.

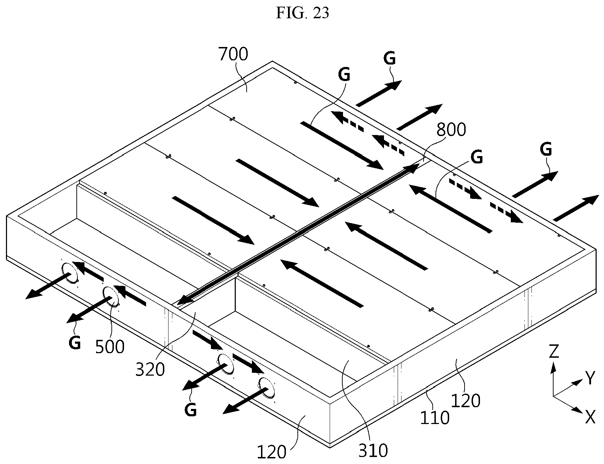

FIG. 23 is a diagram showing the movement of a venting gas G. Referring to Fig. 23, when a thermal event occurs, the venting gas G may flow into the third venting channel 800 through the second venting channel 700. The venting gas G flowing into the third venting channel 800 may flow along the right and left direction or the Y-axis direction. A portion of the venting gas G may move along the left direction or the -Y-axis direction and be discharged to the outside through the venting device 500. A portion of the venting gas G may move along the right direction or the +Y-axis direction and be discharged to the outside through the venting device 500.

In addition, according to this configuration of the present disclosure, the case 100 forming the outer appearance of the battery pack may not be damaged by the venting gas G and the ignitable particle F. Therefore, even if a thermal event occurs, the outer appearance of the battery pack may stably maintain its shape.

In addition, the battery pack according to the present disclosure may further include various components, for example components of the battery pack known at the time of filing of this application, such as a BMS, a bus bar, a relay, a current sensor, etc. in addition to the battery module.

The battery pack according to the present disclosure may be applied to a vehicle, such as an electric vehicle or a hybrid electric vehicle. That is, the vehicle according to the present disclosure may include the battery pack according to the present disclosure. Also, the vehicle according to the present disclosure may further include various other components included in the vehicle in addition to the battery pack. For example, the vehicle according to the present disclosure may further include a body, a motor, a control device such as an ECU (electronic control unit), etc.

The present disclosure has been described in detail. However, it should be understood that the detailed description and specific examples, while indicating preferred embodiments of the disclosure, are given by way of illustration only, since various changes and modifications within the scope of the present disclosure will become apparent to those skilled in the art from this detailed description.

## Claims

1. A battery pack comprising:
a case providing an inner space and having a base plate;
a battery module installed on the base plate and including a rear end cover having a venting hole;
a first venting channel configured to cover the rear end cover and having a first inlet hole in communication with the venting hole and a first outlet hole; and
a second venting channel configured to cover one side of the battery module, coupled to the first venting channel, and having a second inlet hole in communication with the first outlet hole and a second outlet hole.

2. The battery pack according to claim 1, further comprising:
a third venting channel coupled to the second venting channel and having a third inlet hole in communication with the second outlet hole and a third outlet hole.

3. The battery pack according to claim 2,
wherein the case further includes a first partition wall configured to partition the inner space of the case and cover a front surface of the battery module, and
wherein the third venting channel extends along the first partition wall.

4. The battery pack according to claim 3,
wherein the third venting channel is coupled to the first partition wall.

5. The battery pack according to claim 2,
wherein the case includes a side wall installed on the base plate, and
wherein the third outlet hole in the third venting channel communicates with the side wall.

6. The battery pack according to claim 2, further comprising:
a venting device installed in the case,
wherein the third outlet hole of the third venting channel communicates with the venting device.

7. The battery pack according to claim 2, further comprising:
a second partition wall configured to partition the inner space of the case and extend along a front and rear direction,
wherein the second venting channel is coupled to the second partition wall.

8. The battery pack according to claim 1, further comprising:
a fireproofing member located between the first outlet hole and the second inlet hole.

9. The battery pack according to claim 1,
wherein the fireproofing member has a score line.

10. The battery pack according to claim 1,
wherein the case includes a pack cover located on the battery module, and
wherein the second venting channel is located between the battery module and the pack cover.

11. The battery pack according to claim 1,
wherein the first venting channel is fastened to the rear end cover.

12. The battery pack according to claim 1,
wherein the battery module further includes a power terminal protruding forward.

13. A vehicle comprising the battery pack according to any one of claims 1 to 12.
